# EUROPÄISCHE PATENTSCHRIFT

(11) **EP 2 468 567 B1**
(45) Veröffentlichungstag und Bekanntmachung des Hinweises auf die Patenterteilung: **26.06.2013**
(21) Anmeldenummer: 11195031.7
(22) Anmeldetag: 21.12.2011
(51) Int. Cl.: B60N 2/50, B60N 2/52, B60N 2/06

(54) **Horizontale Sitzverstellung**
Horizontal seat adjustment
Réglage horizontal de siège

(30) Priorität: 21.12.2010 DE 102010055342
(43) Veröffentlichungstag der Anmeldung: 27.06.2012
(73) Patentinhaber: GRAMMER AG, 92224 Amberg (DE)
(72) Erfinder: Haller, Erwin, 92262 Birgland (DE); Kolb, Jens, 92281 Königstein (DE)
(74) Vertreter: Hannke, Christian

(56) Entgegenhaltungen:
- DE-A1- 3 517 345
- DE-B3-102005 011 856
- DE-B3-102008 016 685

## Beschreibung

Die Erfindung ist auf eine Sitzfederung, insbesondere eine horizontale Sitzfederung, für Fahrzeuge nach dem Oberbegriff des Patentanspruchs 1 gerichtet.

Ein gattungsgemäßer Sitz mit einer Federvorrichtung ist aus dem Dokument DE-A-35 17 345 bekannt.

Die aus dem Stand der Technik bekannten horizontalen Fahrzeugsitzfederungen erfordern stets die Anbringung eines in der zu federnden Richtung orientierten Federelements. Eine solche Anordnung führt dazu, dass die Fahrzeugsitzfederung zum Erreichen einer bestimmten Federungscharakteristik in der zu federnden Richtung sehr groß ist bzw. nur ein entsprechend kleineres Federelement verwendet werden kann, wodurch jedoch die gewünschte Federungscharakteristik nicht erreicht werden kann. Ferner sind die Federkennlinien der aus dem Stand der Technik bekannten Federelemente nicht veränderbar bzw. beeinflussbar, wodurch die resultierende Federcharakteristik nicht optimal ist.

Es ist somit Aufgabe der vorliegenden Erfindung eine Fahrzeugsitzfederung zur Federung von im Wesentlichen horizontalen Anregungen bereitzustellen, die eine verbesserte Federungscharakteristik ermöglicht, ohne dabei die Nachteile des Standes der Technik zu verwirklichen.

Die zuvor genannte Aufgabe wird erfindungsgemäß durch einen Sitz mit den Merkmalen des Anspruchs 1 gelöst.

Erfindungsgemäß ist die Federeinrichtung durch zumindest ein im Aufnahmevolumen aktiv veränderbares und sich zwischen zwei Anbringungsbereichen länglich, insbesondere in Fahrzeuglängsrichtung bzw. Fahrzeugsitzlängsrichtung, erstreckendes Fluidfederelement, insbesondere ein Pneumatikfederelement, ausgebildet, auf das geneigt zu seiner Längsrichtung mit einer Deformationseinrichtung zum Verformen, insbesondere Biegen, des Fluidfederelements zumindest zeitweise Druckkräfte aufbringbar sind. Bevorzugt erstreckt sich das Federelement im Wesentlichen in einer horizontalen Ebene und besonders bevorzugt genau in einer sich horizontal erstreckenden Ebene.

Geländegängige Fahrzeuge sind neben anderen Fahrzeugen bevorzugt alle landwirtschaftlichen Fahrzeuge, Baufahrzeuge, militärischen Fahrzeuge, Wasserfahrzeuge, Sportfahrzeuge etc. Als geneigt zu seiner Längsrichtung wird vorzugsweise ein Winkel zwischen 1 ° und 179°, bevorzugt zwischen 45° und 135° und besonders bevorzugt ein Winkel zwischen 80° und 100°, insbesondere ein Winkel von im Wesentlichen 90°oder genau 90°, verstanden. Die erfindungsgemäße Lösung ist vorteilhaft, da auf einfache Weise und mit einer langen Lebensdauer die gewünschte Federungscharakteristik bzw. die Verbesserung der Federungscharakteristik erreichbar ist. Weiterhin ist die Federung bevorzugt an variierende Parameter, wie das Gewicht des Passagiers, die Neigung des Fahrzeugs, die Geschwindigkeit der Krafteinleitung und/oder sonstige Parameter anpassbar.

Diese Ausführungsform ist vorteilhaft, da das Federelement aufgrund des Aufnahmebereichs genau positioniert ist bzw. positionierbar ist und daher eine genaue Dimensionierung und Auslegung des Federelements möglich ist, wodurch wiederum die Lebensdauer und die Kosten der gesamten Fahrzeugsitzfederung positiv beeinflussbar sind.

Diese Aufführungsform ist vorteilhaft, da eine Federung des Fahrzeugsitzes in Fahrzeugbreiten- und/oder Fahrzeuglängsrichtung, insbesondere in gegensätzliche Richtungen, mit bevorzugt nur einem Federelement möglich ist. Es ist jedoch ebenfalls denkbar, dass mehrere Federelemente vorgesehen sind, wobei genau ein Federelement oder mehrerer Federelemente zum Federn des Sitzes bzw. der Sitzfläche in Fahrzeugbreitenrichtung vorgesehen sind und/oder genau ein Federelement oder mehrerer Federelemente zum Federn des Sitzes bzw. der Sitzfläche in Fahrzeuglängsrichtung vorgesehen sind.

Gemäß einer weiteren bevorzugten Ausführungsform der vorliegenden Erfindung sind die Kontaktflächenabschnitte, die bevorzugt zumindest zeitweise mit dem Federelement in Kontakt bringbar sind, zumindest abschnittsweise gebogen. Wobei bevorzugt auch gerade oder mit einer geringeren Biegung ausgebildete Kontaktflächenabschnitte vorgesehen sein können, die sich besonders bevorzugt zwischen den gebogenen Kontaktflächenabschnitten erstrecken und diese verbinden. Ein Verbund aus zwei gebogenen Kontaktflächenabschnitten und einem dazwischen angeordneten geraden oder mit einer geringeren Biegung versehenen Kontaktflächenabschnitt bildet bevorzugt ein Kontaktelement aus.

Diese Ausführungsform ist vorteilhaft, da das Federelement in einer fließenden Bewegung und an einem fließenden Übergang verformbar ist, wodurch zum einen ein positiver Effekt auf die Federcharakteristik und zum anderen eine sehr belastungsarme Verformung des Federelements erreicht wird, da Belastungssprünge reduziert bzw. verhindert werden. Gemäß einer weiteren bevorzugten Ausführungsform der vorliegenden Erfindung ist das Federelement ein Pneumatikfederelement und steht zumindest zeitweise kommunizierend mit einer Gasquelle zum Verändern der Federkennlinie in Verbindung, wobei das Gas bevorzugt Luft und besonders bevorzugt Umgebungsluft ist.

Diese Ausführungsform ist vorteilhaft, da durch die Veränderungen eines Luftvolumens bzw. des Drucks in dem Pneumatikfederelement auf sehr einfache und sehr präzise steuerbare Weise eine Veränderung der Federungscharakteristik infolge einer Veränderung der Federkennlinie bewirkbar ist.

Gemäß einer weiteren bevorzugten Ausführungsform der vorliegenden Erfindung ist die Gasquelle eine oder mehrere Druckgasquelle/n und/oder eine oder mehrere zur Federung vertikaler bevorzugt auf den Fahrzeugsitz, insbesondere die Sitzfläche und/oder den Kopplungsbereich, wirkender Impulse angeordnete Gasfeder/n. Als Druckgasquelle kann hierbei bevorzugt jede Zuführeinrichtung angesehen werden, die das Gas mit einem Druck über dem Umgebungsdruck bereitstellt. Besonders bevorzugt ist eine Druckgaswelle z.B. ein Kompressor, ein Druckbehälter, ein Zusatzvolumen, Ähnliches oder Kombinationen daraus. Diese Ausführungsform ist vorteilhaft, da Gas aus bereits vorhandenen Druckgasquellen des Fahrzeugs verwendet werden kann, wodurch die Sitzfederung einfach, kostengünstig und ohne wesentliche Komplexitätserhöhungen implementierbar ist.

Gemäß einer weiteren bevorzugten Ausführungsform der vorliegenden Erfindung ist mindestens eine Sensoreinheit zur Erfassung von zum Beispiel Sitzbewegungen, Federbewegungen, Bewegungen der Deformationseinrichtungen und/oder Fahrzeugbewegungen, insbesondere in Fahrzeuglängsrichtung und/oder Fahrzeugbreitenrichtung, und/oder zur Erfassung von Stellungen bzw. Positionen des Sitzes, der Feder, der Deformationseinrichtung und/oder des Fahrzeugs vorgesehen, die Daten an eine Steuereinrichtung zum Ansteuern der Druckgasquelle übermittelt. Es ist ebenfalls denkbar, dass zum Erfassen einzelner oder aller der zuvor genannten Stellungen und/oder Bewegungen mehrere verschiedene und an verschiedenen Positionen angeordnete Sensoreinrichtungen vorgesehen sind. Die Sensoreinrichtung stellt bevorzugt ein Wegmeßsystem zur Erfassung der Position der Deformationseinrichtung, der Durchbiegung des pneumatischen Federelements und/oder der Dehnung des pneumatischen Federelements dar.

Diese Ausführungsform ist vorteilhaft, da eine genaue Erfassung der jeweiligen Fahr- und/oder Sitzsituation bevorzugt in Echtzeit möglich ist. Weiterhin ist denkbar, dass die von den Sensoreinrichtungen erfassten Daten z.B. vom Fahrzeugsitz oder dem Fahrzeug gespeichert werden, um beispielsweise zu einem späteren Zeitpunkt, wie z.B. bei einem Wartungstermin, ausgewertet werden zu können.

Gemäß einer weiteren bevorzugten Ausführungsform der vorliegenden Erfindung ist bei einer ersten Anregung des Fahrzeugsitzes eine erste Menge eines Gases, z.B. zum Erzeugen eines ersten Drucks in dem Federelement vorsehbar bzw. vorgesehen und bei einer zweiten Anregung ist eine zweite Menge an Gas zum Erzeugen eines zweiten Drucks in dem Federelement vorsehbar, wobei die zweite Anregung stärker ist als die erste Anregung, die zweite Menge an Gas größer ist als die erste Menge an Gas und der sich durch die Zufuhr der zweiten Menge an Gas ergebende zweite Druck bevorzugt größer ist als der erste Druck. Diese Ausführungsform ist vorteilhaft, da eine situationsgerechte Ansteuerung des Federelements, d.h. insbesondere in Abhängigkeit der erfassten Daten der Sensoreinrichtung/en, durchführbar ist.

Gemäß einer weiteren bevorzugten Ausführungsform der vorliegenden Erfindung ist bei der zweiten Anregung das Federelement durch eine Einfahrbewegung der Deformationseinrichtung in einer ersten Richtung deformierbar und ist durch eine Ausfahrbewegung der Deformationseinrichtung in einer zweiten Richtung entgegengesetzt zur ersten Richtung in eine Ausgangs- oder Neutralstellung zurückführbar, wobei dem Federelement während der Einfahrbewegung der Deformationseinrichtung zum Erhöhen der durch das Federelement auf die Deformationseinrichtung ausgeübten Federkraft ein Gas zuführbar ist und bei der Ausfahrbewegung zum Reduzieren eines Rückstoßes bzw. Rebounds Gas entziehbar bzw. abführbar ist.

Diese Ausführungsform ist vorteilhaft, da neben einer Federungswirkung auch eine Dämpfungswirkung mit dem einen Federelement, d.h. insbesondere der Pneumatikfeder, realisierbar ist.

Gemäß einer weiteren bevorzugten Ausführungsform der vorliegenden Erfindung ist mit dem Federelement mindestens ein zuschaltbares Zusatzvolumen zumindest zeitweise fluidmäßig verbunden.

Diese Ausführungsform ist vorteilhaft, da die Feder- und/oder Dämpfungswirkung, und somit die Federcharakteristik und die Dämpfungscharakteristik der Fahrzeugsitzfederung schnell, effektiv und aufwandsarm, insbesondere automatisch oder selbsttätig, veränderbar ist. Das Zusatzvolumen kann dabei ebenfalls als Druckgasquelle angesehen werden und ist besonders bevorzugt mittels einer Einstelleinrichtung, insbesondere einem Kolbenelement, im Volumen veränderbar. Weiterhin ist vorstellbar, dass das Zusatzvolumen mit einer oder mehreren Sensoreinrichtungen ausgestattet ist, durch die z.B. die Stellung der Einstelleinrichtung oder der Druck im Zusatzvolumen erfassbar ist.

Gemäß einer weiteren bevorzugten Ausführungsform der vorliegenden Erfindung ist die Menge an Gas in der Luftfeder manuell von der Person mittels einem Betätigungselement einstellbar.

Diese Ausführungsform ist vorteilhaft, da die Person individuelle Einstellungen vornehmen kann und daher besonders bevorzugt nicht ausschließlich automatisch erfolgenden Einstellungen hinnehmen muss. Somit kann der Fahrer je nach dem von ihm eingestelltem Druck sowohl eine weiche Federkennlinie bis hin zu einer sehr harten Federkennlinie, insbesondere einer einen nahezu verriegelten Zustand oder sogar verriegelten Zustand darstellenden Federkennlinie, einstellen.

Durch Bezugnahme wird der Gegenstand einer am selben Tag von derselben Anmelderin und ebenfalls die Federung eines Fahrzeugsitzes in Fahrzeugbreiten- und/oder Fahrzeuglängsrichtung betreffenden Patentanmeldung vollumfänglich zum Gegenstand der vorliegenden Patentanmeldung gemacht.

Weitere Vorteile, Ziele und Eigenschaften vorliegender Erfindung werden anhand nachfolgender Beschreibung anliegender Zeichnungen erläutert, in welchen beispielhaft Fahrzeugsitzfederungen für die im Wesentlichen horizontale Federung eines Fahrzeugsitzes dargestellt sind. Bauteile der Fahrzeugsitzfederungen, welche in den Figuren wenigsten im Wesentlichen hinsichtlich ihrer Funktion übereinstimmen, können hierbei mit gleichen Bezugszeichen gekennzeichnet sein, wobei diese Bauteile nicht in allen Figuren beziffert oder erläutert sein müssen.

Darin zeigen:
- Fig. 1: eine schematische Darstellung eines Fahrzeugs mit einem Fahrzeugsitz;
- Fig. 2a: beispielhaft das Grundkonzept der vorliegenden Erfindung,
- Fig. 2b: das Grundkonzept der vorliegenden Erfindung unter Verwendung einer pneumatischen Feder;
- Fig. 3a: die pneumatische Feder in einem ersten Zustand;
- Fig. 3b: die pneumatische Feder in einem weiteren Zustand;
- Fig. 4: eine Fahrzeugsitzfederung mit einer veränderten pneumatischen Feder;
- Fig. 5a: die pneumatische Feder aus Fig. 4 in einem ersten Zustand;
- Fig. 5b: die pneumatische Feder aus den Figuren 4 und 5a in einem weiteren Zustand;
- Fig. 6: eine Fahrzeugsitzfederung mit einer veränderten Fluidversorgung;
- Fig. 7a: die pneumatische Feder aus Fig. 6 in einem ersten Zustand;
- Fig. 7b: die pneumatische Feder aus den Figuren 6 und 7a in einem weiteren Zustand;
- Fig. 8a u. 8b: verschiedene Fluidversorgungsanordnungen;
- Fig. 9: eine weitere erfindungsgemäße Ausführungsform mit einer vorgespannten Luftfeder als Rollbalg; und
- Fig. 10: eine weitere erfindungsgemäße Anordnung zum Verriegeln der Längshorizontalfederung des Fahrzeugsitzes.

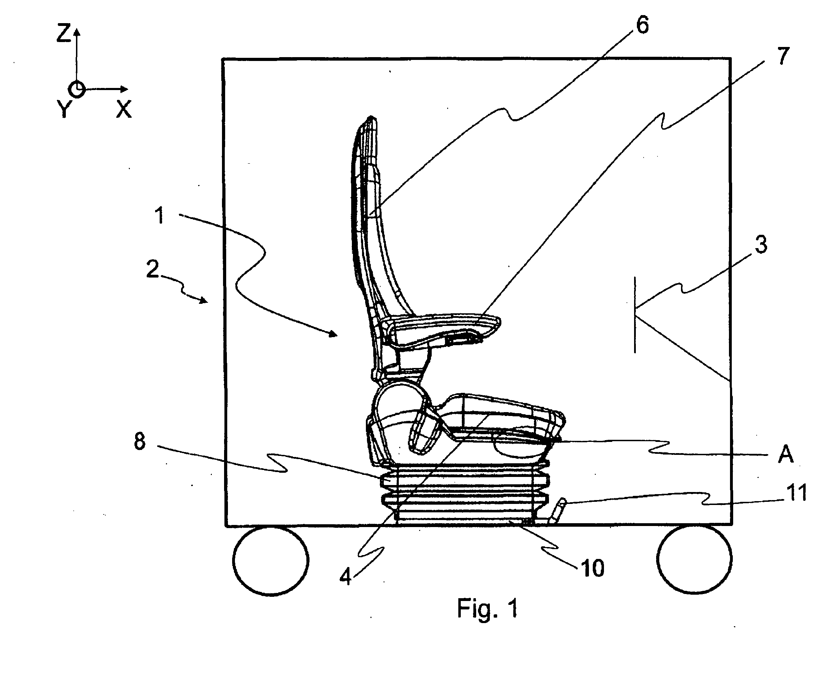

In Fig. 1 ist ein Sitz 1 bzw. ein Fahrzeugsitz 1 in einem Fahrzeug 2 dargestellt. Der Fahrzeugsitz 1 ist in der Fahrzeuglängsrichtung X orientiert und weist eine sich in Fahrzeugbreitenrichtungen Y und Fahrzeuglängsrichtung X erstreckende Sitzfläche 4 sowie eine sich in Fahrzeughöhenrichtung Z erstreckende Rückenlehne 6 auf, die bevorzugt gegenüber der Sitzfläche 4 schwenkbar angeordnet ist. Mit dem Bezugszeichen 3 ist ein Lenkrad gekennzeichnet, das von einer auf dem Fahrzeugsitz 1 sitzenden Person (nicht gezeigt) bedienbar ist. Weiterhin sind an dem Fahrzeugsitz 1, insbesondere an der Rückenlehne 6, bevorzugt eine oder zwei Armauflagen 7 angeordnet.

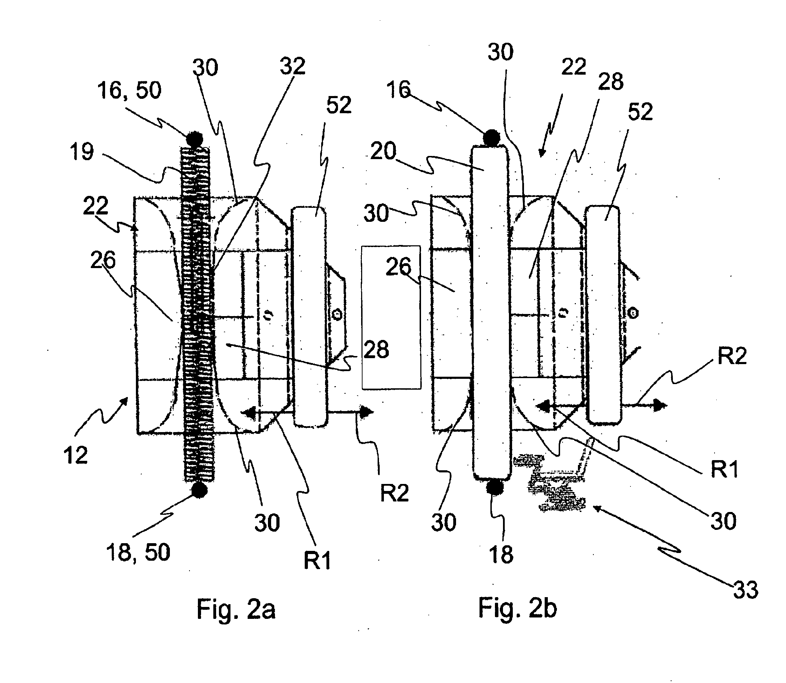

Die Sitzfläche 4 ist bevorzugt durch einen Haltebereich 8 von der Oberseite des Fahrzeugbodens beabstandet, wobei das Fahrzeug 2 und der Fahrzeugsitz 1 bevorzugt über einen Kopplungsbereich 10 fest oder zeitweise beweglich miteinander verbunden sind. Eine Bewegung des Sitzes 1 gegenüber dem Fahrzeug 2 kann beispielsweise ein Verschieben, insbesondere in Fahrzeuglängsrichtung X, sein, wobei mittels des Griffs 11 eine Sitzverschiebung beeinflussbar oder steuerbar ist. Das Bezugszeichen A kennzeichnet einen Bereich in dem die erfindungsgemäße Horizontalfederung bzw. Federeinrichtung 12 (vgl. Fig. 2a-8b) des Fahrzeugsitzes 1 bevorzugt angeordnet ist.

In Fig. 2a ist das Grundkonzept der Federeinrichtung 12 dargestellt. Die Federeinrichtung 12 weist eine Deformationseinrichtung 22 auf, die durch zwei sich bevorzugt gegenüberliegende Kontaktelemente 26, 28 gebildet wird. Die Kontaktelemente 26, 28 weisen bevorzugt gebogene Abschnitte, insbesondere gebogene erste Kontaktflächenanteile 30 und geringer gebogene zweite Kontaktflächenanteile 32, auf, an denen das Federelement 19 zeitweise oder dauerhaft anliegen kann. Das Federelement 19 ist in der in Fig. 2a gezeigten Darstellung eine Spiralfeder 19, die zwischen zwei Anbringungsbereichen 16, 18, insbesondere am Federoberteil 50, ausgebildet ist. Die Spiralfeder 19 ist infolge einer Verschiebung der Deformationseinrichtung 22 mit einem oder beiden der Kontaktelementen 26, 28 in Kontakt bringbar. Eine Verschiebung der Deformationseinrichtung 22 in Richtung R1 oder R2 ergibt sich infolge einer Relativbewegung zwischen dem Federoberteil 50 und dem Federunterteil 52, das bevorzugt fest mit der Deformationseinrichtung 22 gekoppelt bzw. verbunden ist.

In Fig. 2b ist das in Fig. 2a mit Hilfe einer Spiralfeder 19 dargestellte Grundkonzept in der erfindungsgemäßen Ausführungsform, nämlich mit einem Fluidfederelement, insbesondere einem schlauchartigen Fluidfederelement 20 und bevorzugt einem pneumatischen Muskel 20, der sich bevorzugt zwischen den Anbringungsbereichen 16, 18 erstreckt und somit bevorzugt am Federoberteil 50 angebracht ist, ausgestattet. Das pneumatische Federelement 20 passt sich aufgrund hoher Flexibilität noch einfacher an die Form der Deformationseinrichtung 22, insbesondere die Form der Kontaktelemente 26, 28, an als die Spiralfeder 19, ohne dabei Abrieb bzw. spürbaren Abrieb zu erzeugen. Das pneumatische Federelement 20 liegt in der in Fig. 2b gezeigten Neutralstellung bevorzugt an dem gesamten zweiten Kontaktflächenanteil 32 von einem und bevorzugt von beiden Kontaktelementen 26, 28 an. Mit dem Bezugszeichen 33 sind weitere Sitzkomponenten, wie beispielsweise die Sitzfläche 4, die Rückenlehne 6, eine Druckgasquelle 34, Ventileinrichtungen 54, 58, etc., allgemein gekennzeichnet.

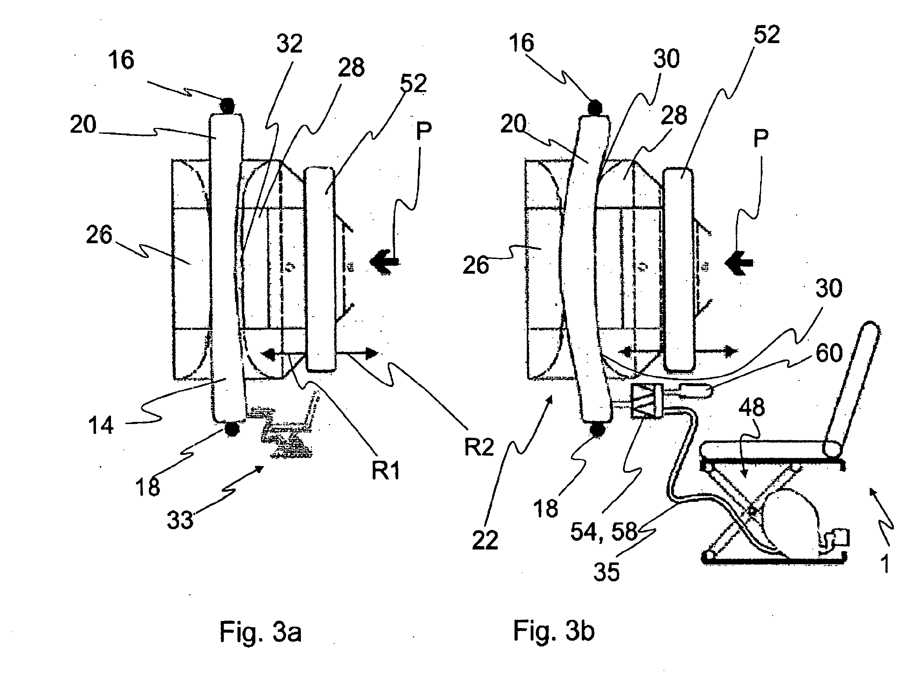

Der Fig. 3a lässt sich entnehmen, dass das pneumatische Federelement 20 in einem mittigen Teilbereich nach innen gewölbt ist, ohne dass das in diesem Bereich vorgesehenen Kontaktelement 28 mit dem zweiten Kontaktflächenanteil 32 das pneumatische Federelement 20 berührt. Es liegt somit ein im Wesentlichen druckloser Zustand im Aufnahmevolumen 14 vor. Der Pfeil P stellt eine Anregungsbewegung des Fahrzeugsitzes 1 bzw. der Deformationseinrichtung dar. Eine Durchbiegung bzw. Dehnung des pneumatischen Federelements 20 ist im drucklosen Zustand einfach, da das pneumatische Federelement 20 stark beweglich bzw. flexibel ist. Der in Pfeilrichtung P gerichteten Bewegung der Deformationseinrichtung 22 wird daher aufgrund einer sehr geringen Federrate des pneumatischen Federelements 20 nur im geringen Maße entgegengewirkt, dieser Zustand des pneumatischen Federelements 20 wird bevorzugt bei geringen Anregungen eingestellt, wobei denkbar ist, dass bei geringen Anregungen die Deformationseinrichtung 22 in das pneumatische Federelement 20 eindringt bzw. die flexible Wandung des pneumatischen Federelements 20 eindrückt. Die Deformationseinrichtung 22 kann ebenfalls als Spange 22 bezeichnet werden. In Fig. 3b ist ein Zustand gezeigt, gemäß dem das Federunterteil 52 und das Federoberteil 50 noch weiter zueinander bewegt wurden bzw. die Deformationseinrichtung 22 noch weiter in Pfeilrichtung P verschoben wurde. Der in Fig. 3b gezeigte Zustand stellt im Vergleich zum in Fig. 3a gezeigten Zustand einen Zustand mit einer größeren Anregung dar, wodurch auch bevorzugt zusätzliches Gas, insbesondere Luft, dem pneumatischen Federelement 20 zugeführt wurde bzw. wird, dies ist insbesondere dadurch ersichtlich, dass das pneumatische Federelement 20 an beiden Kontaktelementen 26, 28 anliegt. Weiterhin ist ersichtlich, dass das pneumatische Federelement 20 mit den Kontaktflächenanteilen 30 in Kontakt steht bzw. teilweise in Kontakt steht. Somit wird bei steigender Auslenkung der Druck und so die Gegenkraft des pneumatischen Federelements 20 erhöht, um ein Anschlagen der relativ zueinander beweglichen Sitzgestellteile der Sitzfederung zu vermeiden.

Beim Rückweg bzw. der Rückstellbewegung wird der Druck bevorzugt abgelassen, so dass die rückführende Kraft reduziert und somit ein Aufschaukeln durch den Rebound verhindert wird.

Durch die Bezugszeichen 54, 58 ist bevorzugt eine Ventileinrichtung gekennzeichnet, die beispielsweise als 2-Wege-Sperr-Ventil 54 und/oder als Zu- und Abluftventil 58 ausgebildet sein kann. Weiterhin ist mit der Ventileinrichtung 54, 58 bevorzugt eine Drossel 60, insbesondere eine Abluftdrossel 60, fluidmäßig verbunden. Zu- oder Abluft ist dem pneumatischen Federelement 20 oder der Ventileinrichtung 54, 58 beispielsweise über eine Leitungsverbindung 35 zu- oder abführbar, die mit weiteren Einrichtungen, wie beispielsweise weiteren Ventileinrichtungen und/oder Gasquellen, gekoppelt sein kann. Die Leitungsverbindung 35 kann zumindest abschnittsweise als Rohr und/oder Schlauch ausgebildet sein. Mit dem Bezugszeichen 48 ist bevorzugt ein Sitzgestell, insbesondere ein Scherengestell, des Fahrzeugsitzes 1 gekennzeichnet.

Einem langfristigen Abweichen von der mittigen Ruhelage bzw. der Neutralstellung, kann durch einen kontinuierlichen Druckaufbau entgegengewirkt werden und somit ein ausreichender Federweg für die Einleitung durch eine steigende Federkennlinie gewährleistet werden. Langfristige Abweichungen von der mittigen Ruhelage sind beispielsweise bei Berg- und/oder Talfahrten denkbar. Im waagrechten ruhigen Betrieb, d.h. bevorzugt nur mit geringen Anregungen, ist für schwere wie auch für leichte Fahrer eine weiche Federkennlinie zur Schwingungsisolation sinnvoll.

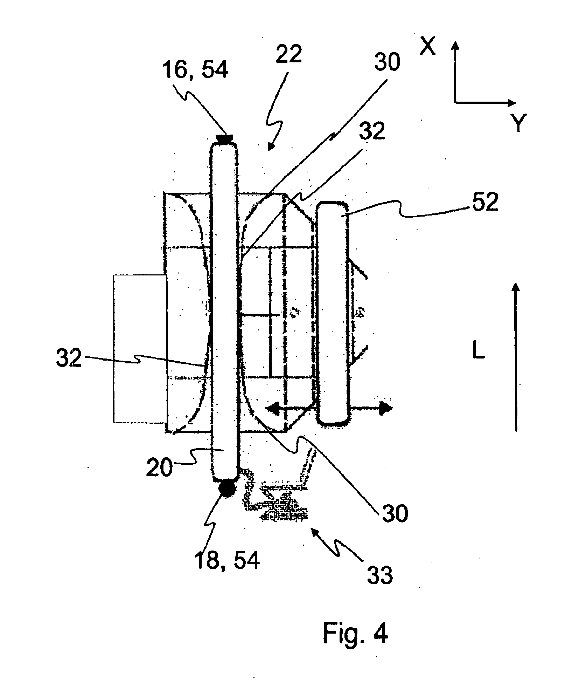

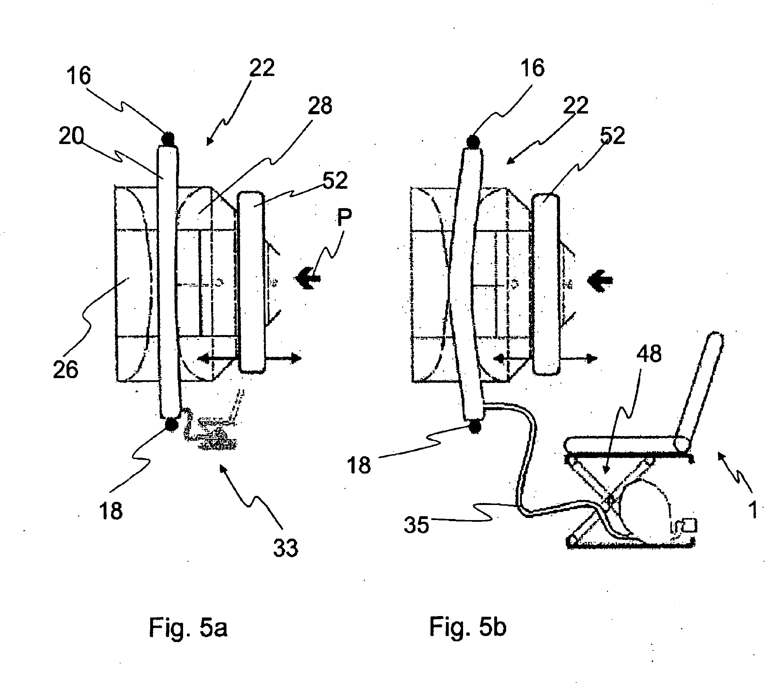

Die in den Figuren 4, 5a und 5b dargestellten Ausführungsformen entsprechen im Wesentlichen den in den Figuren 2a-3b dargestellten Ausführungsformen, wobei das pneumatische Federelement 20 dünner dargestellt ist, d.h. dass das Aufnahmevolumen 14 kleiner dargestellt ist und somit das pneumatische Federelement 20 in der Neutralstellung nicht vollständig an den zweiten Kontaktflächenanteilen 32 anliegt.

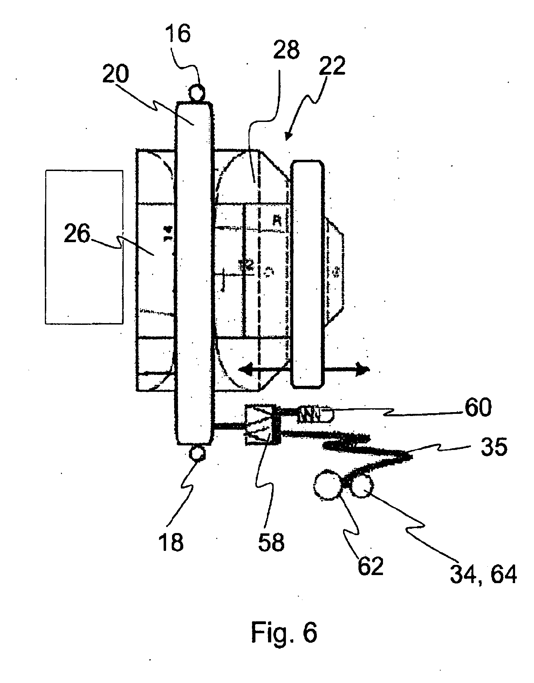

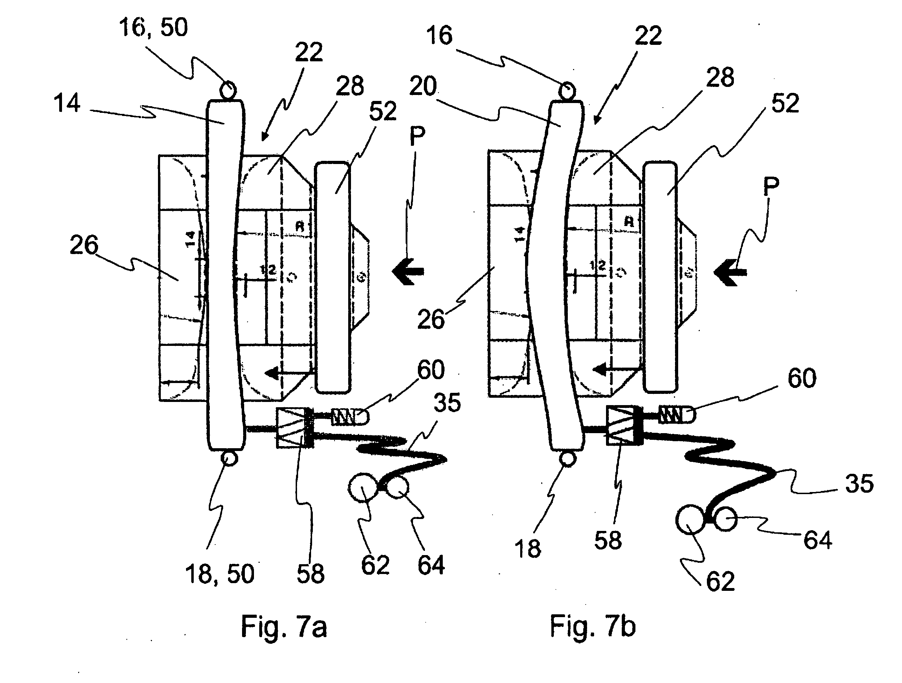

Die in den Figuren 6, 7a und 7b gezeigten Ausführungsformen entsprechen ebenfalls im Wesentlichen den zuvor beschriebenen Ausführungsformen, wobei die Figuren 6, 7a und 7b jedoch abweichende Fluidversorgungsmittel umfassen. Gemäß den Figuren 6, 7a und 7b ist das Fluidfederelement 20 über mindestens eine Leitungsverbindung 35, in der ein Zu- und Abluftventil 58 angeordnet ist, mit einer Druckgasquelle 34, insbesondere einem Kompressor 64, und einem Luftvorrat 62, insbesondere der Umgebung, einer Gasspeichereinrichtung und/oder einer weiteren Leitungsverbindung bzw. einem weiteren Versorgungsnetz, verbunden.

Bevorzugt ist in allen erfindungsgemäßen Ausführungsformen der Druck im Wesentlichen proportional oder genau proportional zu einer Durchbiegung und/oder Dehnung des pneumatischen Federelements 20. Besonders bevorzugt kann der Druck in dem pneumatischen Federelement 20 bzw. die Vorspannung des pneumatischen Federelements 20 proportional zum Fahrergewicht einstellbar sein, insbesondere erfolgt in Abhängigkeit einer Belastung einer zum vertikalen Federn vorgesehenen Gasfeder eine Druckänderung in der pneumatischen Federeinrichtung 20. Die pneumatische Federeinrichtung 20 kann somit fluidmäßig kommunizierend mit einer weiteren pneumatischen Federeinrichtung, die insbesondere zum Federn des Fahrzeugsitzes 1 in vertikaler Richtung Z vorgesehen ist, ausgebildet sein. Die weitere pneumatische Federeinrichtung kann somit eine Druckgasquelle bzw. Gasquelle 34 darstellen. Die Federkennlinie des pneumatischen Federelements 20 ist somit bevorzugt passiv und automatisch infolge einer Belastung des Fahrzeugsitzes 1 durch einen Passagier einstellbar.

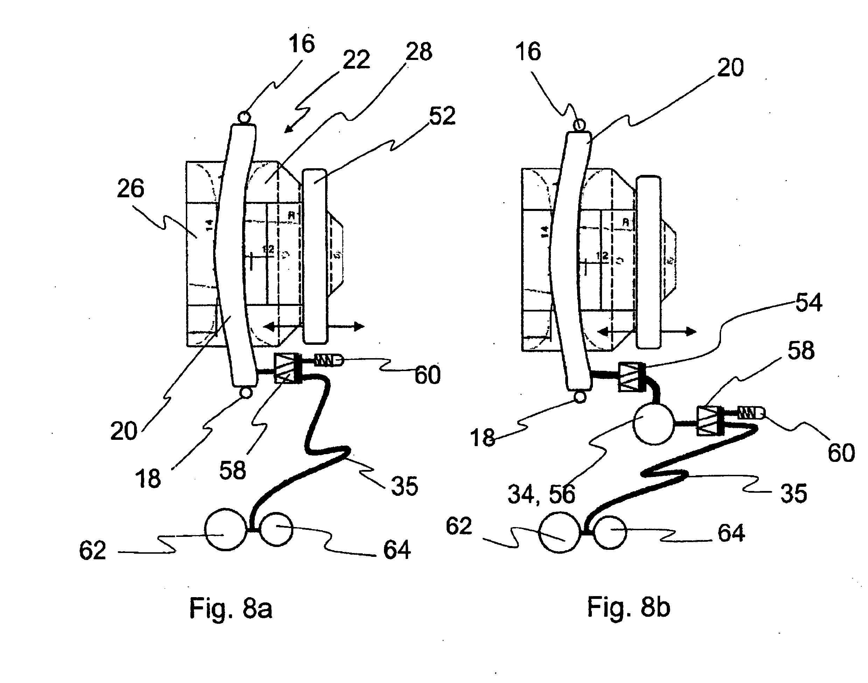

In den Figuren 8a und 8b sind zwei verschiedene Fluidversorgungsanordnungen zum fluidmäßigen Versorgen des pneumatischen Federelements 20 dargestellt. Die in Fig. 8a gezeigte Fluidversorgungsanordnung entspricht den in den Figuren 6, 7a und 7b gezeigten Fluidversorgungsanordnung. Die in Fig. 8b dargestellte Fluidversorgungsanordnung weist zwischen dem pneumatischen Federelement 20 und der Ventileinrichtung 58, d.h. bevorzugt dem Zu- und Abluftventil, ein Zusatzvolumen 34, 56 und eine weitere Ventileinrichtung 54, insbesondere ein 2-Wege Sperr-Ventil, auf.

Es ist ebenfalls denkbar, dass das pneumatische Federelement 20 zum Dämpfen bzw. Federn des Fahrzeugsitzes 1 in Fahrzeuglängsrichtung X mit seiner Längsachse L in Fahrzeugbreitenrichtung Y orientiert angeordnet ist. In einer solchen Anordnung drückt die Anbindung am Federungsoberteil nach rechts (hinten). Zusätzlich kann mit Zuluft nachgeholfen werden. Da der Fahrer bei Bergauffahren nicht vom Sitz rutschen kann und somit mit seinen Beinen nicht gegen die Hangabtriebskraft arbeitet, ist hier mehr Gegendruck durch die Luftfeder erforderlich, um einem Anschlagen nach hinten vorzubeugen.

Durch diese Zu- und Abluftregelung stellt sich das federnde System bei jeder Lage (waagrecht, bergauf, bergab) in die Federwegsmitte, so dass stets ein ausreichender Federweg für Anregungen zur Verfügung steht.

Das Zu- und Abschalten des Zusatzvolumens 56 zur Luftfeder bzw. dem pneumatischen Federelement 20 kann kurzzeitig zusätzliche über den Federweg resultierende Kräfte gegen die Anregungen aufbauen, um diesen entgegenzuwirken. Ein geringeres Arbeitsvolumen, ohne Zusatzvolumen 56, hat bei weiterer Auslenkung eine stärkere Komprimierung und damit eine erhöhte Gegenkraft zur Folge. Gleiches gilt für die Expansion in die entgegengesetzte Richtung. Bei einer Anregung nach vorne kann ab halben Weg das Zusatzvolumen 56 der Luftfeder 20 abgeschaltet werden, so dass die treibende Kraft nach vorne früher abgebaut wird. Gleiches gilt für die Anregung nach hinten. Durch das Zuschalten des Zusatzvolumens 56 bei der Richtungsumkehr der Anregung verpufft die aufgebaute Energie der Luftfeder 20 in das Zusatzvolumen 56, wodurch das System weniger stark zurückgefedert wird. Das System schaukelt sich dadurch weniger auf, was positiv zur Schwingungsisolation beiträgt.

Ein weiteres Prinzip ist, dass man eine Volumenänderung, welche durch das Eindringen der Spange bzw. der Deformationseinrichtung 22 seitlich in das pneumatische Federelement 20 bzw. durch die Biegung des pneumatischen Federelements 20 hervorgerufen wird, mehr oder weniger durch Zu- und Abschalten eines Zusatzvolumens 56 zulässt.

Steht durch das Hinzuschalten des Zusatzvolumens 56 mehr Volumen zur Verfügung, wird relativ gesehen die Feder bzw. das pneumatische Federelement 20 bei Deformation weniger in ihrem Wirkbereich komprimiert als wenn das Zusatzvolumen 56 abgesperrt ist. Für das Verdrängen der Luftmoleküle durch das Eindringen bzw. Biegen steht mehr Raum zur Verfügung. Dadurch steigt der Druck nur geringfügig an. Es wirkt somit eine weichere Federkennlinie. Bei geringen Auslenkungen ist es somit sinnvoll, mit zugeschaltetem Zusatzvolumen 56 zu arbeiten. Bei größeren Auslenkungen wird das Zusatzvolumen 56 ab einem bestimmten Weg abgeschaltet, um den Schlauch bzw. das pneumatische Federelement 20 mit weiterer Auslenkung Richtung Ende des Federweges stärker zu komprimieren. Dadurch wird eine erhöhte Gegenkraft aufgebaut, um den Endanschlag nicht zu berühren.

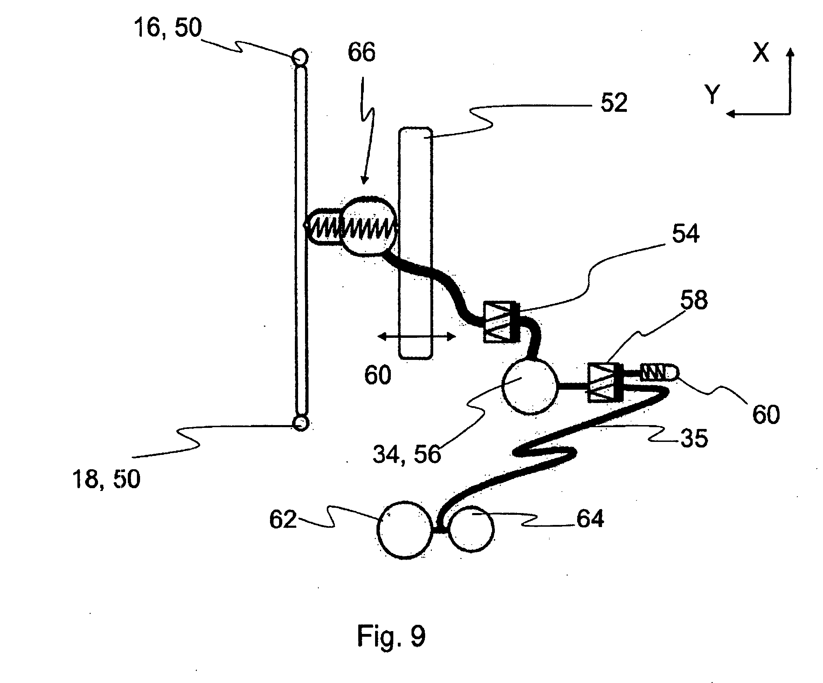

In Fig. 9 ist eine weitere Ausführungsform der vorliegenden Erfindung dargestellt. Es lässt sich dieser Darstellung entnehmen, dass zwischen dem ersten Federungsteil bzw. Federungsoberteil 50 und dem zweiten Federungsteil bzw. Federungsunterteil 52 genau eine bzw. mindestens eine vorgespannte Luftfeder als Rollbalg 66 angeordnet ist.

Eine Luftfeder arbeitet als Rollbalg mit sehr geringer Reibung, wenn sie mit Druck beaufschlagt wird. Dieser Druck führt zu einer Ausschubkraft und somit zur Einstellung der Mitte im zur Verfügung stehenden Federweg in einem mit einer Schraubenfeder vorgespanntem System (= Ersatz des Gewichts einer vertikalen Luftfeder). In der in Fig. 9 gezeigten Darstellung erstreckt sich die Fahrtrichtung "vorwärts" bevorzugt in Richtung des Pfeils "Y".

Die Schraubenfeder ist derart schwach ausgelegt, dass bei Fahrt bergab am Ende des Federwegs eine Federkraft von ca. 200N gegen die Hangabtriebskraft und die schwach mit Druck vorgespannte Luftfeder wirkt. Mehr Kraft ist nicht erforderlich, da der Fahrer zusätzlich mit den Füßen gegen die Auslenkung drückt, damit er nicht bei derartigem Gefälle sonst vom Sitz rutschen würde. Bei längerfristigem Bergabfahren kann zusätzlich der Druck der Luftfeder über das Abluftventil reduziert werden.

Beim Bergauffahren drückt die Anbindung an dem Federungsoberteil entgegen der Richtung Y und somit nach hinten.

Zusätzlich kann mit Zuluft nachgeholfen werden, d.h., dass beispielsweise sensorgesteuert in Abhängigkeit der Fahrsituation der Luftfeder 66 Luft zu- oder abführbar ist. Da der Fahrer bei Bergauffahren nicht vom Sitz rutschen kann und somit mit seinen Beinen nicht gegen die Hangabtriebskraft arbeitet, ist hier mehr Gegendruck durch die Luftfeder 66 erforderlich, um einem Anschlagen nach hinten vorzubeugen.

Durch diese Zu- und Abluftregelung stellt sich das federnde System bei jeder Lage (waagrecht, bergauf, bergab) in die Federwegsmitte, so dass ausreichender Federweg für Anregungen zur Verfügung steht.

Das Zu- und Abschalten des Zusatzvolumens 34,56 zur Luftfeder 66 kann kurzzeitig zusätzliche über den Federweg resultierende Kräfte gegen die Anregungen aufbauen, um diesen entgegenzuwirken. Ein geringeres Arbeitsvolumen, ohne Zusatzvolumen 34,56, hat bei weiterer Auslenkung eine stärkere Komprimierung und damit eine erhöhte Gegenkraft zur Folge. Gleiches gilt für die Expansion in die entgegengesetzte Richtung. Bei einer Anregung nach vorne kann ab halben Weg das Zusatzvolumen 34,56 der Luftfeder 66 abgeschaltet werden, so dass die treibende Kraft der nach vorne früher abgebaut wird. Gleiches gilt für die Anregung nach hinten. Durch das Zuschalten des Zusatzvolumens 34,56 bei der Richtungsumkehr der Anregung verpufft die aufgebaute Energie der Luftfeder 66 in das Zusatzvolumen 34,56, wodurch das System weniger stark zurückgefedert wird. Das System schaukelt sich dadurch weniger auf, was positiv zur Schwingungsisolation beiträgt.

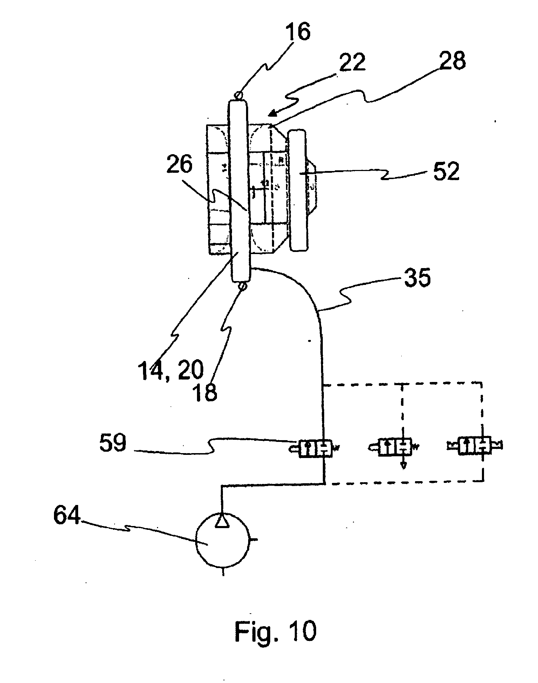

In Fig. 10 ist die Luftfeder 14 über eine Leitungsverbindung 35 mit mindestens einer Druckgasquelle, insbesondere einer Luftfeder zum vertikalen Federn des Fahrzeugsitzes und/oder einem Kompressor 64, verbunden, wobei zwischen der Druckgasquelle bevorzugt mindestens eine Ventileinrichtung bzw. eine weitere Ventileinrichtung 59 angeordnet ist. Die weitere Ventileinrichtung 59 ist bevorzugt ein 2/2 Wege-Ventil, durch das in einer ersten Stellung ein Gasfluss, insbesondere Luftfluss, führbar ist und mittels dem in einer zweiten Stellung ein Gasfluss hemmbar und besonders bevorzugt vollständig unterbrechbar ist. Durch die gestrichelt dargestellten Linien ist die Anbindung bzw. die Verwendung alternativer oder zusätzlicher Ventileinrichtungen dargestellt.

Mittels der Ventileinrichtung 59 wird bevorzugt eine manuelle Einstellbarkeit der Federkennlinie, bzw. der Federsteifigkeit ermöglicht, dies stellt eine weitere Ausführungsform von Längshorizontalfederungen (LH-Federung) dar.

Bei diesem System übernimmt bevorzugt der Nutzer/Fahrer die Einstellung der Federhärte für die Längshorizontalfederung.

Hierbei ist die Auslegung der Feder 14 bevorzugt so zu bestimmen, dass für die Schwingungsisolierung in längshorizontaler Richtung ein sehr geringer Betriebsdruck, welcher besonders bevorzugt weit unterhalb des Betriebsdrucks der Vertikalfeder liegt, erforderlich ist.

Ziel dieser Auslegung mit niedrigem Betriebsdruck ist zudem, dass bei einer Druckerhöhung (bis maximal Vertikaldruck) in der LH-Federung eine derartige Versteifung der Luftfeder 14 erfolgt, infolgedessen keine, bzw. nur geringe Bewegungen in längshorizontaler Richtung mehr erreicht werden. Es ist daher bevorzugt eine formschlüssige und/oder kraftschlüssige Verriegelung bewirkbar.

An dieser Stelle sei noch darauf hingewiesen, dass sich die Anmelderin vorbehält sämtliche in den Anmeldungsunterlagen offenbarten Merkmale zu beanspruchen soweit sie einzeln oder in Kombination miteinander gattungsgemäße oder aus dem Stand der Technik bekannte Blasventile vorteilhaft weiterentwickeln.

### Bezugszeichenliste

- 1: Sitz/ Fahrzeugsitz
- 2: Fahrzeug
- 3: Lenkrad
- 4: Sitzfläche
- 6: Rückenlehne
- 7: Armlehne
- 8: Halteeinrichtung
- 10: Kopplungsbereich
- 11: Griff
- 12: Federeinrichtung
- 14: Aufnahmevolumen
- 16: erster Anbringungsbereich
- 18: zweiter Anbringungsbereich
- 19: Spiralfeder
- 20: Fluidfederelement
- 22: Deformationseinrichtung
- 24: Aufnahmebereich
- 26: erstes Kontaktelement
- 28: zweites Kontaktelement
- 30: erste Kontaktflächenanteile
- 32: zweite Kontaktflächenanteile
- 33: Sitzkomponenten
- 34: Gasquelle/ Druckgasquelle
- 35: Leitungsverbindung
- 36: Zusatzvolumen
- 48: Scherengestell
- 50: Federungsoberteil
- 52: Federungsunterteil
- 54: Ventileinrichtung
- 56: Zusatzvolumen
- 58: Ventileinrichtung
- 59: weitere Ventileinrichtung
- 60: Drossel
- 62: Luftvorrat
- 64: Kompressor
- 66: vorgespannte Luftfeder
- A: Anbringungsbereich
- L: Längsrichtung
- P: Pfeil
- R1: erste Richtung
- R2: zweite Richtung
- X: Fahrzeug- bzw. Sitzlängsrichtung
- Y: Fahrzeug- bzw. Sitzbreitenrichtung
- Z: Fahrzeug- bzw. Sitzhöhenrichtung/ vertikale Richtung

## Patentansprüche

1. Sitz (1) für ein Fahrzeug (2), insbesondere für geländegängige Fahrzeuge (2), mit mindestens einer sich in Fahrzeuglängsrichtung (X) und Fahrzugbreitenrichtung (Y) erstreckenden Sitzfläche (4) zum Aufnehmen einer Person, einer Rückenlehne (6) zum Abstützen des Rückens der Person sowie einer in vertikaler Richtung (Z) unter der Sitzfläche (4) sich erstreckenden und mit dieser verbundenen Halteeinrichtung (8) zum Beabstanden der Sitzfläche (4) von einem Kopplungsbereich (10) zum Koppeln des Sitzes (1) mit dem Fahrzeug (2), wobei die Halteeinrichtung (8) mindestens eine Federeinrichtung (12) zum zumindest zweitweise beweglichen Anordnen von zumindest der Sitzfläche (4) gegenüber dem Kopplungsbereich (10) in Fahrzeuglängsrichtung (X) und/oder in Fahrzeugbreitenrichtung (Y) aufweist,
**dadurch gekennzeichnet, dass**
die Federeinrichtung (12) durch zumindest ein im Aufnahmevolumen (14) aktiv veränderbares und sich zwischen zwei Anbringungsbereichen (16, 18) länglich erstreckendes Fluidfederelement (20), insbesondere ein Pneumatikfederelement, ausgebildet ist, auf das geneigt zu seiner Längsrichtung (L) mit einer Deformationseinrichtung (22) zum Verformen, insbesondere Biegen, des Fluidfederelements (20) Druckkräfte aufbringbar sind,
wobei
die Deformationseinrichtung (22) ein Teil der Federeinrichtung (12) ist und einen Aufnahmebereich (24) ausbildet, durch den hindurch sich das Fluidfederelement (20) erstreckt,
wobei
zwei Kontaktelemente (26, 28) den Aufnahmebereich (24) ausbilden und Kontaktflächenanteile (30, 32) aufweisen, die nur zeitweise mit dem Fluidfederelement (20) in Kontakt stehen.

2. Fahrzeugsitz (1) nach Anspruch 1,
**dadurch gekennzeichnet, dass**
die Kontaktflächenanteile (30) zumindest abschnittsweise gebogen sind.

3. Fahrzeugsitz (1) nach einem der vorangegangenen Ansprüche,
**dadurch gekennzeichnet, dass**
das als Pneumatikfederelement (20) ausgebildete Fluidfederelement (20) zumindest zeitweise kommunizierend mit einer Gasquelle (34) zum Verändern der Federkennlinie in Verbindung steht.

4. Fahrzeugsitz (1) nach Anspruch 3,
**dadurch gekennzeichnet, dass**
die Gasquelle (34) eine Druckgasquelle und/oder eine zur Federung vertikaler Impulse angeordnete Gasfeder ist.

5. Fahrzeugsitz (1) nach einem der vorangegangenen Ansprüche,
**dadurch gekennzeichnet, dass**
mindestens eine Sensoreinheit zur Erfassung von Sitzbewegungen und/oder Fahrzeugbewegungen, insbesondere in Fahrzeuglängsrichtung (X) und/oder Fahrzeugbreitenrichtung (Y), vorgesehen ist, die Daten an eine Steuereinrichtung zum Ansteuern der Druckgasquelle übermittelt.

6. Fahrzeugsitz (1) nach einem der vorangegangenen Ansprüche,
**dadurch gekennzeichnet, dass**
bei einer ersten Anregung des Fahrzeugsitzes (1) eine erste Menge eines Glases in dem als Pneumatikfederelement (20) ausgebildeten Fluidfederelement (20) vorsehbar ist und bei einer zweiten Anregung eine zweite Menge an Gas in dem Pneumatikfederelement (20) vorsehbar ist, wobei die zweite Anregung stärker ist als die erste Anregung und die zweite Menge an Gas größer ist als die erste Menge an Gas.

7. Fahrzeugsitz (1) nach Anspruch 6,
**dadurch gekennzeichnet, dass**
bei der zweiten Anregung das Pneumatikfederelement (20) durch eine Einfahrbewegung der Deformationseinrichtung (22) in einer ersten Richtung (R1) deformierbar ist und durch eine Ausfahrbewegung der Deformationseinrichtung (22) in einer zweiten Richtung (R2) entgegengesetzt zur ersten Richtung (R1) zurückführbar ist, wobei dem Pneumatikfederelement (20) während der Einfahrbewegung der Deformationseinrichtung (22) zum Erhöhen der durch das Pneumatikfederelement (20) auf die Deformationseinrichtung (22) ausgeübten Federkraft ein Gas zuführbar ist und bei der Ausfahrbewegung zum Reduzieren eines Rückstoßes Gas entziehbar ist.

8. Fahrzeugsitz (1) nach Anspruch 7,
**dadurch gekennzeichnet, dass**
mit dem Pneumatikfederelement (20) mindestens ein zu- und abschaltbares Zusatzvolumen (36) zumindest zeitweise fluidmäßig verbunden ist.

9. Passagiersitz (1) nach einem der Ansprüche 1 - 4,
**dadurch gekennzeichnet, dass**
die Menge an Gas in dem als Luftfeder ausgebildeten Fluidfederelement manuell von der Person mittels einem Betätigungselement einstellbar ist.

## Claims

1. A seat (1) for a vehicle (2), in particular for all-terrain vehicles (2), with at least one seat area (4) extending in the longitudinal direction (X) of the vehicle and in the width-wise direction (Y) of the vehicle for receiving a person, a backrest (6) for supporting the back of the person and a holding device (8) extending in the vertical direction (Z) under the seat area (4) and being connected to the latter for keeping the seat area (4) at a distance from a coupling region (10) for coupling the seat (1) to the vehicle (2), wherein the holding device (8) has at least one spring device (12) for the movable arrangement at least for a time of at least the seat area (4) with respect to the coupling region (10) in the longitudinal direction (X) of the vehicle and/or in the width-wise direction (Y) of the vehicle, **characterized in that** the spring device (12) is formed by at least one fluid spring element (20), in particular a pneumatic spring element, which is variable in an active manner in the receiving volume (14) and extends in an elongate manner between two application regions (16, 18) and onto which pressing forces are capable of being applied at an inclination to its longitudinal direction (L) with a deformation device (22) for deforming, in particular bending, the fluid spring element (20),
wherein
the deformation device (22) is part of the spring device (12) and forms a receiving region (24) through which the fluid spring element (20) extends wherein
two contact elements (26, 28) form the receiving region (24) and have contact face portions (30, 32) which are in contact with the fluid spring element (20) only for a time.

2. A vehicle seat (1) according to claim 1, **characterized in that** the contact face portions (30) are bent at least locally.

3. A vehicle seat (1) according to any one of the preceding claims, **characterized in that** the fluid spring element formed as pneumatic spring element (20) is connected at least for a time in a communicating manner to a gas source (34) for altering the spring characteristic line.

4. A vehicle seat (1) according to claim 3, **characterized in that** the gas source (34) is a compressed gas source and/or a gas spring arranged in order to cushion vertical pulses.

5. A vehicle seat (1) according to any one of the preceding claims, **characterized in that** at least one sensor unit is provided in order to detect seat movements and/or vehicle movements, in particular in the longitudinal direction (X) of the vehicle and/or in the width-wise direction (Y) of the vehicle, which transmits data to a control device for actuating the compressed gas source.

6. A vehicle seat (1) according to any one of the preceding claims, **characterized in that** with a first stimulus of the vehicle seat (1) a first quantity of a gas is capable of being provided in the fluid spring element formed as pneumatic spring element (20), and with a second stimulus a second quantity of gas is capable of being provided in the pneumatic spring element (20), wherein the second stimulus is stronger than the first stimulus and the second quantity of gas is greater than the first quantity of gas.

7. A vehicle seat (1) according to claim 6, **characterized in that** with the second stimulus the pneumatic spring element (20) is capable of being deformed by a retraction movement of the deformation device (22) in a first direction (R1) and is capable of being returned by an extension movement of the deformation device (22) in a second direction (R2) opposed to the first direction (R1), wherein a gas is capable of being supplied to the pneumatic spring element (20) during the retraction movement of the deformation device (22) in order to increase the spring force exerted by the pneumatic spring element (20) upon the deformation device (22) and gas is capable of being withdrawn during the extension movement in order to reduce a recoil.

8. A vehicle seat (1) according to claim 7, **characterized in that** at least one additional volume (36) capable of being turned on and off is connected to the pneumatic spring element (20) in terms of the fluid at least for a time.

9. A passenger seat (1) according to any one of claims 1 to 4, **characterized in that** the quantity of gas in the fluid spring element formed as air spring is capable of being set manually by the person by means of an actuating element.

## Revendications

1. Siège (1) pour un véhicule (2), en particulier pour des véhicules tout-terrain (2), avec au moins une surface de siège (4) s'étendant dans la direction longitudinale du véhicule (X) et dans la direction de la largeur du véhicule (Y), qui est destinée à recevoir une personne, un dossier (6) pour supporter le dos de la personne, ainsi qu'un dispositif de retenue (8) s'étendant dans la direction verticale (Z) sous la surface de siège (4) et raccordée à cette dernière, pour espacer la surface de siège (4) vis-à-vis d'une zone d'accouplement (10) pour l'accouplement du siège (1) avec le véhicule (2), dans lequel le dispositif de retenue (8) présente au moins un dispositif de ressort (12) pour l'agencement mobile au moins de façon intermittente d'au moins la surface de siège (4) par rapport à la zone d'accouplement (10) dans la direction longitudinale du véhicule (X) et/ou dans la direction de la largeur du véhicule (Y),
**caractérisé en ce que**
le dispositif de ressort (12) est constitué d'au moins un élément de ressort à fluide (20) activement modifiable dans le volume de réception (14) et s'étendant en long entre deux zones de mise en place (16, 18), en particulier un élément de ressort pneumatique, sur lequel des forces de pression peuvent être exercées de façon inclinée par rapport à sa direction longitudinale (L) avec un dispositif de déformation (22) destiné à la déformation, en particulier à la flexion, de l'élément de ressort à fluide (20),
dans lequel le dispositif de déformation (22) est une partie du dispositif de ressort (12) et constitue une zone de réception (24) à travers laquelle s'étend l'élément de ressort à fluide (20),
dans lequel deux éléments de contact (26, 28) constituent la zone de réception (24) et présentent des fractions de surface de contact (30, 32) qui ne sont en contact avec l'élément de ressort à fluide (20) que de façon intermittente.

2. Siège de véhicule (1) selon la revendication 1,
**caractérisé en ce que**
les fractions de surface de contact (30) sont courbées au moins par tronçons.

3. Siège de véhicule (1) selon une des revendications précédentes,
**caractérisé en ce que**
l'élément de ressort à fluide (20) constitué en tant qu'élément de ressort pneumatique (20) est raccordé en communication au moins intermittente avec une source de gaz (34) pour faire varier la courbe caractéristique de ressort.

4. Siège de véhicule (1) selon la revendication 3,
**caractérisé en ce que**
la source de gaz (34) est une source de gaz comprimé et/ou un ressort à gaz agencé pour la suspension de ressorts d'impulsions verticales.

5. Siège de véhicule (1) selon une des revendications précédentes,
**caractérisé en ce qu'**
il est prévu au moins une unité de capteur pour la détection de mouvements du siège et/ou de mouvements du véhicule, en particulier dans la direction longitudinale du véhicule (X) et/ou dans la direction de la largeur du véhicule (Y), cette unité transmettant des données à un dispositif de commande pour le pilotage de la source de gaz comprimé.

6. Siège de véhicule (1) selon une des revendications précédentes,
**caractérisé en ce que**,
lors d'une première excitation du siège de véhicule (1), une première quantité d'un gaz dans l'élément de ressort à fluide (20) constitué en tant qu'élément de ressort pneumatique (20) peut être prévue et, lors d'une seconde excitation, une seconde quantité de gaz dans l'élément de ressort pneumatique (20) peut être prévue, dans lequel la seconde excitation est plus forte que la première excitation, et la seconde quantité de gaz est plus grande que la première quantité de gaz.

7. Siège de véhicule (1) selon la revendication 6,
**caractérisé en ce que**,
lors de la seconde excitation, l'élément de ressort pneumatique (20) est déformable par un mouvement de rentrée du dispositif de déformation (22) dans une première direction (R1), et peut être ramené par un mouvement de sortie du dispositif de déformation (22) dans une seconde direction (R2) opposée à la première direction (R1), dans lequel un gaz peut être conduit à l'élément de ressort pneumatique (20) pendant le mouvement de rentrée du dispositif de déformation (22) pour l'augmentation de la force de ressort exercée par l'élément de ressort pneumatique (20) sur le dispositif de déformation (22), et un gaz peut être retiré lors du mouvement de sortie pour la réduction d'un recul.

8. Siège de véhicule (1) selon la revendication 7,
**caractérisé en ce qu'**
à l'élément de ressort pneumatique (20) est raccordé, au moins par intermittence par voie fluidique, au moins un volume supplémentaire (36) pouvant être mis en circuit et hors circuit.

9. Siège de passager (1) selon une des revendications 1 à 4,
**caractérisé en ce que**
la quantité de gaz dans l'élément de ressort à fluide constitué en tant que ressort à air est réglable manuellement par la personne au moyen d'un élément d'actionnement.
